Europäisches Patentamt

European Patent Office

Office européen des brevets

(19)

(11) Veröffentlichungsnummer : **0 020 699**
**B1**

(12) **EUROPÄISCHE PATENTSCHRIFT**

(45) Veröffentlichungstag der Patentschrift :
16.11.83

(21) Anmeldenummer : 80900082.1

(22) Anmeldetag : 01.12.79

(86) Internationale Anmeldenummer :
PCT/EP 79/00094

(87) Internationale Veröffentlichungsnummer :
WO WO/80011 (12.06.80 Gazettee 80/13)

(51) Int. Cl.³ : **B 29 F 3/06**, B 29 F 3/00

(54) **VERFAHREN UND VORRICHTUNG ZUR HERSTELLUNG VON ENDLOSEN KUNSTSTOFFERZEUGNISSEN AUS DUROPLASTISCHEN FORMMASSEN.**

(30) Priorität : 06.12.78 AT 8701/78

(43) Veröffentlichungstag der Anmeldung :
07.01.81 Patentblatt 81/01

(45) Bekanntmachung des Hinweises auf die Patenterteilung : 16.11.83 Patentblatt 83/46

(84) Benannte Vertragsstaaten :
CH DE FR GB NL SE

(56) Entgegenhaltungen :
FR A 1 132 590
FR A 2 225 273
GB A 794 498
GB A 1 047 264
NL C 46 843
US A 3 861 848
US A 4 089 917

(73) Patentinhaber : POLYMATT KUNSTSTOFFE
Neue Bruggerstrasse 292
CH-5506 Mägenwil (CH)

(72) Erfinder : ERISMANN, Hans
Neue Bruggerstrasse 292
CH-5506 Mägenwil (CH)
Erfinder : ERISMANN, Hans-Peter
Neue Bruggerstrasse 292
CH-5506 Mägenwil (CH)
Erfinder : PICHLER, Heinrich
Funkestrasse 3/36
A-5020 Salzburg (AT)

(74) Vertreter : Torggler, Paul, Dr. et al
Patentanwälte Dr. Paul Torggler Dr. Engelbert Hofinger Wilhelm-Greil-Strasse 16
A-6020 Innsbruck (AT)

Verfahren und Vorrichtung zur Herstellung von endlosen Kunststofferzeugnissen aus duroplastischen Formmassen

Die Erfindung betrifft ein Verfahren zur Herstellung von endlosen Kunststofferzeugnissen aus duroplastischen Formmassen durch Strangpressen, wobei die für jeden Strangabschnitt benötigte Formmasse in den Füllraum der Strangpresse eingebracht, in das Formwerkzeug vorgeschoben und mit dem im vorausgehenden Arbeitstakt gebildeten Strangabschnitt vereinigt wird, worauf ein im wesentlichen formfester Strang aus den Formwerkzeug austritt, und eine Strangpresse zur Durchführung des Verfahrens.

Es ist bekannt, duroplastische Formmassen in Strangpressen zu Profilen, Rundstäben od. dgl. zu verarbeiten, wobei die in den Füllraum eingebrachte Masse mit Hilfe eines periodisch hin- und herbewegten Preßkolbens bei gleichzeitiger Aushärtung durch das Werkzeug ins Freie gepreßt wird. Dabei treten jedoch selbst bei einfachsten Querschnittsformen des Formwerkzeuges, wie etwa kreisrund, er Querschnittsformen, Probleme bei der vollständigen Füllung des Füllraumes auf, sodaß nur Massen mit besonders weichem Fließverhalten verarbeitet werden können, und der Nachteil der entsprechend langen Aushärtezeit in Kauf genommen werden muß. Um die Aushärtezeit zu verringern, ist es zwar bereits bekannt geworden (DE-B-1 187 789), die Formmasse im Mundstück des Formwerkzeuges nahezu auf Härtungstemperatur zu erhitzen, sodaß sie als im wesentlichen formfester Strang wieder austritt, die Füllprobleme, insbesondere bei komplizierten Querschnittsformen und Formmassen mit hartem Fließverhalten, konnten jedoch nicht gelöst werden.

Die AT-B-194.123 zeigt eine Einrichtung zum Pressen von hohlen Formkörpern aus nicht oder nur schwer fließfähigen Duroplasten mit hohem Füllstoffanteil, bei der der Füllraum der Presse mit allseitig zu einem Kern hin bewegbaren Preßkolben umschlossen ist, die beim Preßvorgang annähernd diagonal oder senkrecht zum Kern hin bewegbar sind und die eingefüllte Masse verdichten. Es handelt sich hiebei jedoch nicht um eine Strangpresse zur Erzeugung von endlosen Produkten, sondern die Formkörper weisen nur eine bestimmte Länge auf.

Es ist weiters aus Fig. 3 der FR-A-22 25 273 ein Extruder für thermoplastische Kunststoffe bekannt, bei dem die Formmasse in mehrere Teilmengen geteilt und von verschiedenen Seiten in den Füllraum des Formwerkzeuges eingebracht wird. Die Aufteilung der von der Extruderschnecke kommenden Formmasse in mehrere Teilmengen, die bei der Einbringung in den Füllraum wieder vereinigt werden, dient dabei dazu, bei üblichen Schneckenextrudern voneinander abhängige Betriebszustände bzw., Arbeitsschritte, wie die Durchmischung des Ausgangsmaterials, die Dosierung der Formmasse, und den Einspritzdruck in den Füllraum einzeln zu variieren. Die leicht fließfähigen thermoplastischen Formmassen können auch ohne die Aufteilung und Zuführung in Teilmengen gleichmäßig in den Füllraum eingebracht werden. Die Zuführung der Teilmengen von verschiedenen Seiten ist jedoch bei duroplastischen Formmassen allein, insbesondere bei komplizierteren Querschnittsformen der herzustellenden Stränge, nicht ausreichend, um einen fehlerfreien Strang mit homogener Materialverteilung zu erzielen.

Es ist weiters auch bekannt, (GB-A-1,047,264) Kabel oder Drähte mit einer thermoplastischen Umhüllung zu versehen. Mittels zweier sich senkrecht zur Arbeitsrichtung bewegender Hauptkolben wird die Formmasse in den Füllraum eingebracht, wobei zusätzlich schräg angeordnete Hilfskolben vorgesehen sind, die während des Rücklaufs der Hauptkolben Formmasse zuführen und so einen kontinuierlichen Arbeitsablauf gewährleisten.

Strangpressen für leicht preßbare metallische Werkstoffe zur Herstellung von Rohren weisen einen im Mundstück des Formwerkzeuges mittels radialer Stege zentrisch fixierten Kern auf (beispielsweise nach der AT-B-184.028). Das stranggepreßte Rohr wird durch diese Stege längsgeteilt und muß unmittelbar dahinter radial verdichtet bzw. verschweißt werden, um ein nahtloses Rohr zu erhalten.

Gewendelte Stege als Kernzentrierung sind weiters aus der DE-B-2 212 716 bei einem Spritzkopf zum Herstellen von Hohlsträngen aus Thermoplasten bekannt geworden.

Wie eingangs erwähnt, konnte das Stranspreßverfahren zur Verarbeitung von duroplastischen Formmassen mit harten oder mittlerem Fließverhalten, insbesondere zur Herstellung von Erzeugnissen mit komplizierten Querschnittsformen, nicht zufriedenstellend angewandt werden, da die gleichmäßige vollständige Füllung des Füllraumes nicht gelöst werden konnte. Beispielsweise werden daher Rohre nach dem Zieh-, nach dem Wickel- oder nach dem Schleuderverfahren hergestellt.

Die Aufgabe der Erfindung besteht nun darin, ein Verfahren und eine Vorrichtung zur Herstellung von Fertigteilen aus Duroplasten zu schaffen, das die Verarbeitung von duroplastischen Formmassen mit beliebigem Fließverhalten in Strangpressen gestatten.

Erfindungsgemäß wird hierzu ein Verfahren angewandt, bei dem die insbesondere wenig fließfähige Formmasse für jeden Strangabschnitt in mindestens zwei Teilmengen geteilt und im wesentlichen gleichzeitig von mindestens zwei Seiten in den Füllraum eingebracht wird, worauf der sich aus den Teilmengen formende Strangabschnitt beim Vorschub durch das Formwerkzeug senkrecht zur Vorschubrichtung verdichtet wird.

Die bekannte Aufteilung der Formmasse in Teilmengen und deren Zuführung von verschiedenen Seiten in den Füllraum ermöglicht eine etwa vollständige Ausfüllung des Füllraumes mit Formmasse, wobei die anschließende Verdichtung der Strangabschnitte senkrecht zur Vorschubrichtung nach dem Eintritt der Formmasse in das Formwerkzeug vor allem dann, wenn sie kaum fließfähig ist, Unregelmäßigkeiten der Füllung ausgleicht, sodaß ein kompaktes Produkt von gleichmäßiger Dichte entsteht.

Die Aufteilung der Formmasse und Zuführung der einzelnen Teilmengen richtet sich dabei nach der Querschnittsfläche jenes Bereiches des Mundstückes, für den die jeweilige Teilmenge im wesentlichen bestimmt ist.

Besonders vorteilhaft tritt dabei in Erscheinung, daß durch das erfindungsgemäße Verfahren Kunststofferzeugnisse mit mindestens einem Hohlraum, beispielsweise Rohre, herstellbar sind, wenn der Füllraum von einem Kern durchsetzt ist. Die ungleichmäßige Füllung des von einem Kern durchsetzten Füllraumes wird insbesondere in diesem Fall durch die nachfolgende Querverdichtung ausgeglichen. Auf diese Weise können auch Kunststoffteile hergestellt werden, die mehrere längsverlaufende Hohlräume aufweisen.

Die Formmasse wird in einem üblichen Mischer aus Harz, Härter und Füllstoffen vermischt, in Teilmengen geteilt und der Strangpresse zugeführt. Es ist selbstverständlich möglich, jede für einen Strangabschnitt benötigte Teilmenge der Formmasse in einem eigenen Mischer herzustellen. Eine völlig exakte Berechnung der Teilmengen wird dabei ebenfalls dadurch erübrigt, daß die Strangabschnitte im Formwerkzeug senkrecht zur Vorschubrichtung verdichtet werden.

Nach einer ersten Ausführung der Erfindung gelangt jede Teilmenge der Formmasse in einen als Nebenzylinder dienenden Zufuhrkanal, von wo sie durch einen Nebenkolben in den Füllraum bewegt wird.

Nach einer zweiten Ausführung ist vorgesehen, daß aus jeder Teilmenge der Formmasse noch verformbare Teilstücke vorgeformt und in den Füllraum eingebracht werden. Jede Teilmenge der Formmasse durchläuft also eine Vorverformungsanlage, in der sie die ungefähre Form eines Teilstückes des Strangabschnittes erhält. Von besonderer Wichtigkeit ist bei dieser Ausführung, daß sich die vorgeformten Teilstücke des Strangabschnittes miteinander verbinden, ohne daß Nähte sichtbar werden oder Schwachstellen auftreten. Dabei ist bei dieser Ausführung weiters vorgesehen, daß die Teilstücke entlang ihren parallel zur Vorschubrichtung verlaufenden Berührungsflächen mit weiteren Teilstücken mit Unebenheiten versehen, beispielsweise gezahnt werden, wobei die Verzahnung beim Einbringen in den Füllraum ineinandergreift.

Die noch verformbaren Teilstücke werden beim Vorschub durch das Formwerkzeug über die Verzahnung durch die anschließende Verdichtung senkrecht zur Vorschubrichtung besonders innig miteinander verbunden. Dabei verfließen die Randbereiche der einander berührenden, noch verformbaren Teilstücke ineinander und bilden zusammen einen homogen Strangabschnitt.

Eine Strangpresse zur Durchführung des erfindungsgemäßen Verfahrens mit einem Preßkolben, mit einem Füllraum mit einer Zufuhreinrichtung für die Formmasse, mit einem Formwerkzeug und vorzugsweise mit einer Heiz- bzw. Kühleinrichtung, ist derart ausgebildet, daß die Zufuhreinrichtung mindestens zwei seitlich in den Füllraum mündende Zufuhrkanäle und pro Zufuhrkanal einen Nebenkolben aufweist, und daß im Formwerkzeug zumindest eine Querschnittsverjüngung vorgesehen ist, wobei gegebenenfalls der Füllraum von mindestens einem Kern durchsetzt ist.

Jede Teilmenge kann lose in den Zufuhrkanal eingebracht und durch den Nebenkolben in den Füllraum eingepreßt oder eingespritzt werden.

Wie bereits erwähnt, ist es jedoch auch denkbar, aus jeder Teilmenge der Formmasse ein Teilstück des in einem Arbeitsgang entstehenden Strangabschnittes vorzuformen, und dieses Teilstück durch den Zufuhrkanal zum Füllraum zu befördern. In diesem Fall mündet der Zufuhrkanal vorzugsweise in einen schrägen Winkel zur Ausstoßrichtung des Preßkolbens unmittelbar neben dem Füllraum, und der Nebenkolben dient dazu, das Teilstück in den Füllraum einzuschieben.

Selbstverständlich kann auch die weitere Möglichkeit vorgesehen sein, nämlich daß eine oder mehrere Teilmengen der Formmasse lose in den Nebenzylinder und in den Füllraum eingebracht werden, während die zweite oder übrigen Teilmengen vorgeformt als Teilstücke zugeführt werden.

Bei jeder der beschriebenen Arten der Einführung der Formmasse kann in bevorzugten Ausführungen der erfindungsgemäßen Strangpresse vorgesehen sein, daß die Länge der Stirnfläche des Nebenkolbens der Länge des Füllraumes entspricht, und daß gegebenenfalls die Stirnfläche des Nebenkolbens der Oberfläche des entstehenden Strangabschnittes angepaßt ist und in der vorderen Endstellung als seitliche Begrenzung des Füllraumes dient. Besonders vorteilhaft erweisen sich die vorstehenden Ausführungen, wenn der Füllraum von einem Kern durchsetzt ist, da in diesem Fall bereits eine gleichmäßige Verteilung der Formmasse im Füllraum wünschenswert ist.

In einer weiteren Ausführung der erfindungsgemäßen Strangpresse zur Herstellung von Erzeugnissen mit einem längsverlaufenden Hohlraum ist vorgesehen, daß der Kern sich in das Formwerkzeug erstreckt und mittels Halteteilen am Formwerkzeug abgestützt ist. Diese Ausführung erlaubt eine genauere Führung des Kernes auch dann, wenn, bedingt durch das Fließverhalten der Formmasse, nicht völlig gleiche Teilmengen durch die Nebenkolben zugeführt werden und somit unterschiedliche Preßdrücke der Nebenkolben einen im Formwerkzeug nicht fixierten Kern seitlich verschieben könnten. Die Halteteile können dabei durch Stege gebildet sein, die am Kern oder an der Innenwand des Formwerkzeuges angeordnet sind und gegebenenfalls Schraubenflächen aufweisen. Die Ausbildung von Schraubenflächen vermeidet zumindest teilweise eine gleichmäßige Ausrichtung des Gefüges der Formmasse im entstehenden Strangabschnitt, insbesondere dann, wenn längliche Füllstoffe, beispielsweise Holzspäne, beigemischt werden.

Die anschließende, innerhalb des Formwerkzeugs durchgeführte Verdichtung senkrecht zur Vorschubrichtung, wird bevorzugt dadurch erzielt, daß die Querschnittsverjüngung durch zumindest eine nach innen gerichtete Abstufung des Formwerkzeuges gebildet ist, die in einem Winkel von ca. 60° zur Vorschubrichtung verläuft. Bei Abstützung des Kernes im Formwerkzeug mittels Stegen ist bevorzugt vorgesehen, daß mindestens zwei Abstufungen im Formwerkzeug vorgesehen sind, von denen mindestens je eine unmittelbar vor oder hinter dem Stützbereich für den Kern angeordnet ist.

Jede in Vorschubrichtung vor dem Stützbereich für den Kern gelegene Abstufung im Formwerkzeug dient dabei gleichzeitig nochmals einer besseren Umfangsverteilung der Formmasse, während jede nach dem Stützbereich ausgebildete Abstufung auch der Schließung der durch die Stege gebildeten Schlitze dient. Die Oberflächen der Abstufungen können in Umfangsrichtung uneben, beispielsweise schrägverzahnt sein, sodaß auch hiedurch eine Ausrichtung und Vergleichmäßigung des Gefüges der Formmasse und insbesondere ihrer Füllstoffe zumindest teilweise verhindert wird.

Anstelle der Stege zur Kernabstützung im Formwerkzeug kann in einer weiteren Ausführung der erfindungsgemäßen Strangpresse auch vorgesehen sein, daß die Halteteile durch mindestens zwei Zentrierkolben gebildet sind, die zu den Nebenkolben parallel ausgerichtet sind. Die Zentrierkolben bewahren während des Zuführens der Teilmengen der Formmasse in den Füllraum den Kern vor einer seitlichen Verschiebung und werden zu Beginn der Vorschubbewegung vom Kern zurückgezogen, sodaß der entstehende Strangabschnitt passieren kann. Bei der Rückwärtsbewegung des Preßkolbens ergreifen sie wiederum den Kern, sodaß in den Füllraum weitere Formmasse eingebracht werden kann.

Die Verteilung der Formmasse wird bereits bei der Zuführung der Teilmengen in den mit einem Kern versehenen Füllraum zusätzlich noch erleichtert, wenn der Kern im Querschnitt etwa elliptisch ist und die größere Ellipsenachse des Kernquerschnittes in der Bewegungsrichtung von zwei einander diametral gegenüberliegenden Nebenkolben liegt. Die Verwendung des elliptischen Kernes ist bei allen Kunststoffprodukten möglich, bei denen kein zylindrischer Hohlraum erforderlich ist, bzw. bei solchen, bei denen der Hohlraum nur des Materialeinsparung dient. Die Ausrichtung der großen Ellipsenachse in der Bewegungsrichtung der Nebenkolben bietet jedoch auch noch den Vorteil, daß eine seitliche Durchbiegung des Kernes ebenfalls vermieden wird. Bei der Verarbeitung von gut fließfähigen Formmassen kann bei einem elliptischen Kern gegebenenfalls auch auf die vorstehend beschriebene Fixierung des Kerns im Formwerkzeug verzichtet werden.

Wenn jedoch ein zylindrischer Hohlraum erwünscht bzw. notwendig ist, kann anstelle eines Kernes mit elliptischen Querschnitt die Verteilung der Formmasse im Füllraum verbessert und die seitliche Durchbiegung des Kernes erfindungsgemäß auch dadurch vermieden werden, daß am Ende jedes Zuführkanals, für die Formmasse ein im wesentlichen keilförmiges Profilstück parallel zum Kern angeordnet ist, wobei dessen Dicke etwa dem Kerndurchmesser entspricht, und dessen Keilkante zum Nebenkolben weist. Auch diese Ausführung eignet sich vor allem für gut fließfähige Formmassen, wobei auch hier gegebenenfalls auf die Fixierung des Kernes im Formwerkzeug verzichtet werden kann.

Das keilförmige Profilstück, das, in Einpreßrichtung des Nebenkolbens gesehen, dem Kern vorgestellt und mit den Seitenwänden des Zufuhrkanals fest verbunden ist, teilt jede Teilmenge der Formmasse nochmals in zwei Teile, die durch die ober- und unterhalb des Profilstückes verbleibenden Spalten in den Füllraum gelangen können.

Nachstehend wird nun die Erfindung an Hand der Figuren der beiliegenden Zeichnungen in mehreren Ausführungsbeispielen näher beschrieben, ohne jedoch darauf beschränkt zu sein.

Es zeigen :

Figur 1 schematisch eine erste Ausführung einer erfindungsgemäßen Strangpresse,

Figur 2 bis 4 Schnitte nach der Linie II-II der Fig. 1 durch drei Ausführungsbeispiele mit den Nebenkolben in vorderer Endstellung, wobei Fig. 2 eine Ausführung mit zylindrischem Kern, Fig. 3 eine Ausführung ohne Kern, und Fig. 4 eine Ausführung mit elliptischem Kern wiedergibt,

Figur 5 einen Schnitt entsprechend Fig. 2 durch ein viertes Ausführungsbeispiel,

Figur 6 einen Schnitt nach der Linie VI-VI der Fig. 5,

Figur 7 schematisch einen Schnitt ähnlich Fig. 2 durch ein fünftes Ausführungsbeispiel,

Figur 8 einen vergrößerten Längsschnitt durch eine bevorzugte Ausführung des Formwerkzeuges,

Figur 9 einen Schnitt nach der Linie IX-IX der Fig. 8,

Figur 10 schematisch eine Draufsicht auf eine weitere Ausführung des Formwerkzeuges,

Figur 11 einen Schnitt nach der Linie XI-XI der Fig. 10,

Figur 12 in Schrägansicht ein Stück eines erfindungsgemäß hergestellten Rohres,

Figur 13 den Vorderabschnitt einer bevorzugten Ausführung des Preßkolbens,

Figur 14 schematisch eine weitere Ausführung einer erfindungsgemäßen Strangpresse ähnl. Fig. 1 und

Figur 15 schematisch ein vorgeformtes Teilstück eines Strangabschnittes zur Verwendung in einer Strangpresse nach Fig. 14.

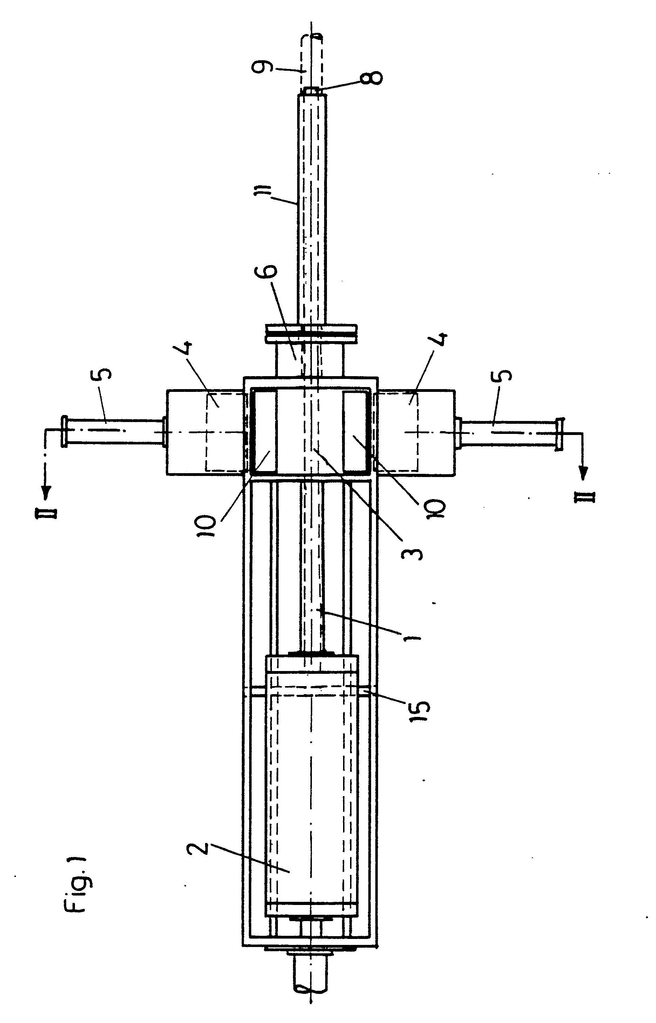

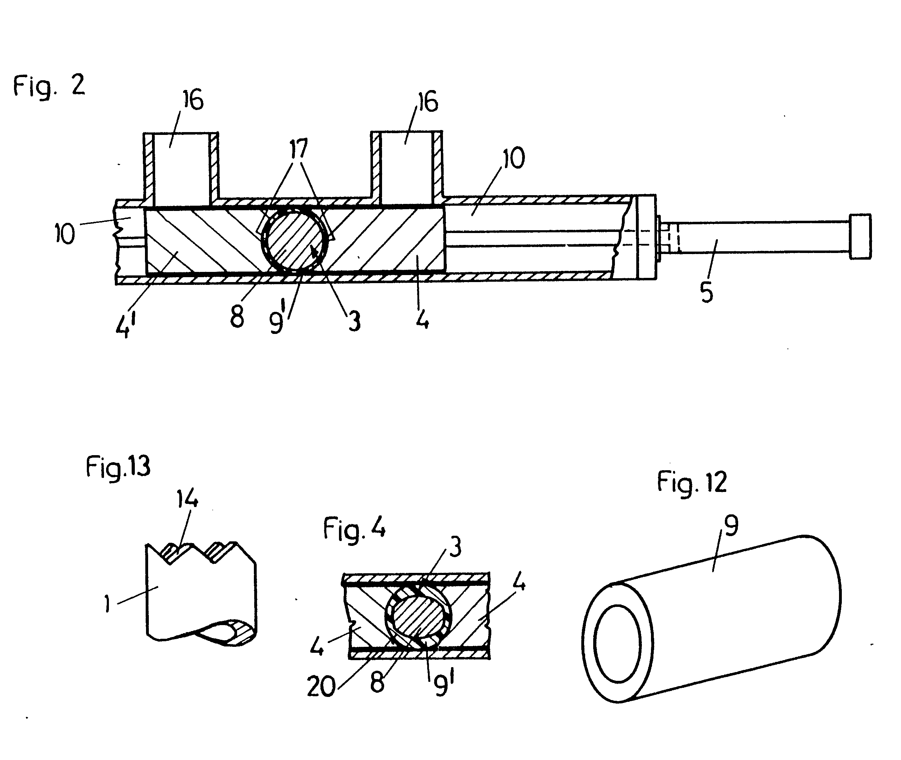

Die in Fig. 1 und 2 gezeigte Strangpresse zur Herstellung von Rohren weist einen Preßkolben 1, der mittels einer allgemein mit 2 bezeichneten Vorschubeinrichtung, die in den Füllraum 3 gelangende Formmasse durch das Formwerkzeug 6 preßt, auf. Das Formwerkzeug 6 bzw. die gesamte Strangpresse kann mit einer nicht näher dargestellten Kühl- und/oder Heizeinrichtung 11 versehen sein. Der Preßkolben 1 ist als Hohlkolben ausgebildet und gleitet auf einem Kern 8, dessen, in Preßrichtung gesehen, hinteres Ende staar an einen festen Teil 15 der Strangpresse befestigt ist, und der sich durch den Füllraum 3 in das Formwerkzeug 6 erstreckt. Die Länge des Kernes, der als innere Führung des Kunststoffrohres 9 dient, ist so bemessen, daß an seinem vorderen Ende die Aushärtung der Formmasse weit genug fortgeschritten ist, um eine Deformierung des Kunststoffrohres 9 zu verhindern. Vorzugsweise läuft der Kern 8 in seinem vordersten Abschnitt geringfügig konisch zusammen.

Die für einen Strangabschnitt 9′ benötigte Formmasse wird in zwei Teilmengen geteilt und in den Füllraum 3 im wesentlichen gleichzeitig eingebracht. Die Aufteilung in Teilmengen und Einbringung von zwei Seiten ermöglicht auch bei kaum fließfähigem Formmassen eine gute Füllung des Füllraumes, die bei einseitiger Zuführung nicht erreichbar wäre. Dazu münden in diesen beidseitig senkrecht je ein als Nebenzylinder ausgebildeter Zuführkanal 10, in dem je ein Nebenkolben 4 angeordnet ist, der durch eine Vorschubeinrichtungen 5 betätigt wird. Die Stirnflächen 17 der Nebenkolben 4, die beispielsweise aus Holz oder Polypropylen bestehen, gleichen in ihrer Formgebung der Oberfläche des entstehenden Strangabschnittes 9′ des Kunststoffrohres 9 und sind in den Ausführungen nach den Fig. 2, 4 und 7 konkav gewölbt. Die Länge der Stirnflächen 17 entspricht weiters der Länge des Füllraumes 3. Die Nebenkolben 4 dienen bei dieser Ausführung daher nicht bloß der Zuführung der Teilmengen der Formmasse 20, die durch die Einfalltrichter 16 lose in den Zuführkanal 10 eingebracht und dort über die gesamte Breite verteilt wird, sondern in ihrer vorderen Endstellung gleichzeitig als seitliche Begrenzung des Füllraumes 3 während der Vorschubbewegung des Preßkolbens 1. In Fig. 3 ist ein Schnitt ähnlich Fig. 2 durch den den Füllraum 3 umgebenden Bereich der Strangpresse gezeigt. Bei dieser Ausführung, mittels deren I-Profilstäbe erzeugt werden können, ist kein Kern vorhanden, der übrige Aufbau jedoch gleich. Die in zwei Teilmengen geteilte Formmasse für einen Strangabschnitt 9′ wird über die beiden seitlichen Zuführkanäle zugeführt und mittels der Nebenkolben 4 in den Füllraum 3 eingepreßt. Auch bei diesem Profilquerschnitt ist die vollständige Füllung des Füllraumes nur durch die zweiseitige Zuführung möglich.

Die Ausführungen nach Fig. 4, die ebenfalls einen Schnitt ähnlich Fig. 2 darstellt, weist einen Kern 8 mit etwa elliptischem Querschnitt auf. Der größte Durchmesser liegt in der Bewegungsrichtung der Nebenkolben 4. Dadurch wird die Einpressung der Formmasse 20 in die nicht unmittelbar den Nebenkolben 4 zugeordneten Bereiche des Füllraumes 3 erleichtert, vor allem aber auch die Gefahr des seitlichen Verschiebens oder Durchbiegens des Kernes 8 bei nicht genau gleichen Teilmengen in den Zuführkanälen 10 verringert.

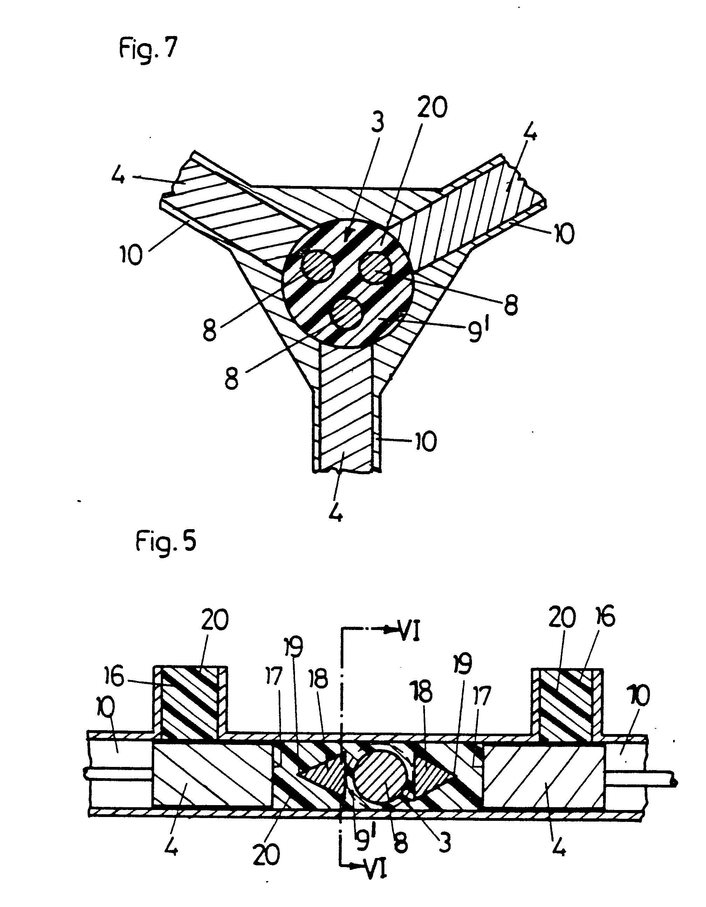

In der in Fig. 5 dargestlllten Ausführung, die ebenfalls einen Schnitt ähnlich Fig. 2 zeigt, ist am Ende jedes Zuführkanales 10 ein im wesentlichen keilförmiges Profilstück 18 angeordnet, das sich von einer Seitenwand 22 des Zuführkanals 10 zur anderen erstreckt (Fig. 6).

Die Höhe des Profilstückes 18 entspricht etwa dem Durchmesser des Kernes 8, sodaß das Profilstück 18 in Vorschubrichtung des Nebenkolbens 4 gesehen, den Kern 8 abdeckt. Ober- und unterhalb des Profilstückes 18 verbleibt je ein Spalt 21, durch den die Verbindung vom Zuführkanal 10 zum Füllraum 3 gewahrt bleibt. Die in die Einfülltrichter 16 eingebrachten und durch die Nebenkolben 4 zugeführten Teilmengen der Formmasse 20 werden an der Keilkante 19 des Profilstückes 18, die in Richtung des Nebenkolbens 4 weist, nochmals geteilt und durch die Spalte 21 in den Füllraum 3 gebracht. Auf diese Weise wird ebenfalls eine Verschiebung des Kernes 8 beim Einpressen der Formmasse 20 nahezu ausgeschlossen. Füllraumseitig weist das Profilstück eine ebene Oberfläche auf, die senkrecht zur Einpreßrichtung des Nebenkolbens 4 und tangential zum Füllraum 3 verläuft.

Die Fig. 7 zeigt einen Schnitt ähnlich Fig. 2 durch ein weiteres Ausführungsbeispiel der Erfindung, zur Erzeugung von endlosen Kunststofferzeugnissen mit einer weiteren, komplizierten Querschnittsform.

In dieser Ausführung sind drei Kerne 8 vorgesehen, durch die ein Strangabschnitt 9′ mit drei Kanälen hergestellt werden kann. Die Strangpresse ist mit drei Nebenkolben 4 versehen, die im Winkel von 120° zueinander angeordnet, drei Teilmengen der für den Strangabschnitt benötigten Formmasse 20 in den Füllraum 3 einpressen.

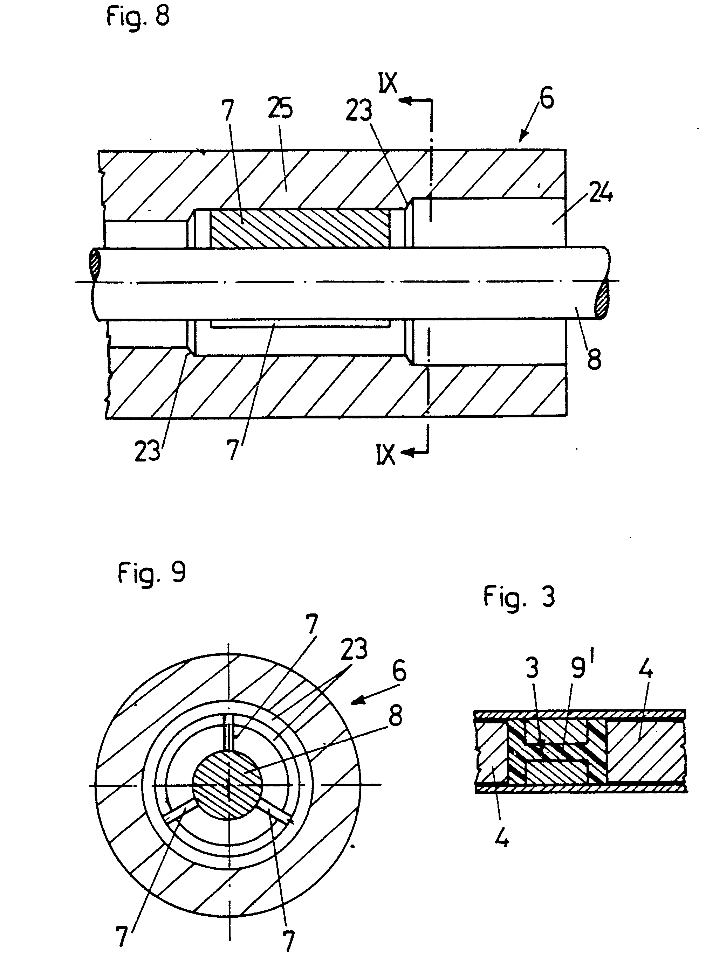

Die erfindungsgemäße Strangpresse ermöglicht die Herstellung einer Vielzahl von endlosen Produkten mit unterschiedlicher Formgebung mit oder ohne Kern durch die Aufteilung der für einen Strangabschnitt 9′ benötigten Formmasse 20 und deren Zuführung mittels zweier oder mehrerer Nebenkolben 4. Deren Zahl und Anordnung richtet sich nach dem gewünschten Profilquerschnitt sowie nach der Fließfähigkeit der duroplastischen Formmasse. Da trotz der Aufteilung der Formmasse 20 eine gleichmäßige Füllung des Füllraumes 3, insbesondere bei schlecht fließfähigen Formmassen, kaum erreicht werden kann, ist eine nachfolgende Verdichtung senkrecht zur Vorschubrichtung im Formwerkzeug vorgesehen. Fig. 8 zeigt im Längsschnitt durch ein bevorzugtes Ausführungsbeispiel eines Formwerkzeuges 6, in das das Ende eines Kernes 8 ragt, wobei unmittelbar nach der Eintrittsöffnung 24 eine Querschnittsverjüngung ausgebildet ist, die aus zwei mit Abstand hintereinander nach innen vorspringenden, als Prallflächen wirkenden Abstufungen 23 besteht. Die durch die Eintrittsöffnung 24 in das Formwerkzeug eingeschobene Formmasse 20 wird durch die erste Abstufung 23 senkrecht zur Vorschubrichtung verdichtet, sodaß Unregelmäßigkeiten in der Verteilung der Formmasse ausgeglichen werden. Der Abschnitt des Formwerkzeuges 6 zwischen den beiden Abstufungen 23 dient als Stützbereich 25 für die Halteteile des Kernes 8, die in dieser Ausführung durch Stege 7 gebildet sind, die radial vom Kern 8 abstehen. Die Stege 7 können beispielsweise mit dem Kern 8 oder mit der Innenwand des Stützbereiches 25 fest verbunden sein.

Beim weiteren Vorschub der querverdichteten Formmasse zwischen den Stegen 7 der Kernabstützung wird das entstehende Hohlprofil längsgeschlitzt und unmittelbar danach durch die zweite Abstufung 23 nochmals verdichtet, wodurch die Schlitze wieder verschlossen werden. Je nach Zusammensetzung und Reaktionsgeschwindigkeit der Formmasse kann dabei sowohl eine Kühlung bzw. Heizung des Kernes 8 als auch des Formwerkzeuges 6 erfolgen. Die Abstufungen 23 verlaufen beispielsweise in einem Winkel von 60° zur Vorschubrichtung und weisen abgerundete Kanten sowie gegebenenfalls nicht dargestelle Unebenheiten in ihrer Oberfläche auf, etwa eine Schrägverzahnung, sich kreuzende Rillen od. dgl. Diese Unebenheiten in den Oberflächen der Abstufungen vermeiden, insbesondere bei länglichen Füllstoffen, eine allzu starke parallele Ausrichtung der Füllstoffteile. Zum gleichen Zweck können auch die Stege 7 mit Schraubenflächen versehen sein. Es ist selbstverständlich möglich, vor bzw. hinter dem Stützbereich 25 jeweils mehr als eine Abstufung 23 vorzusehen.

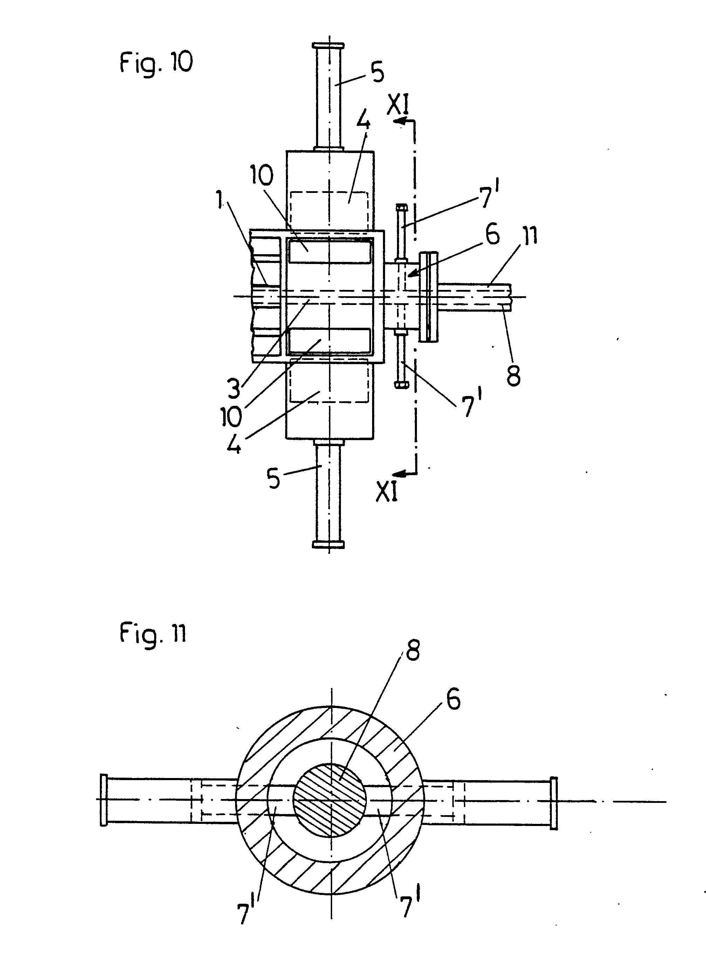

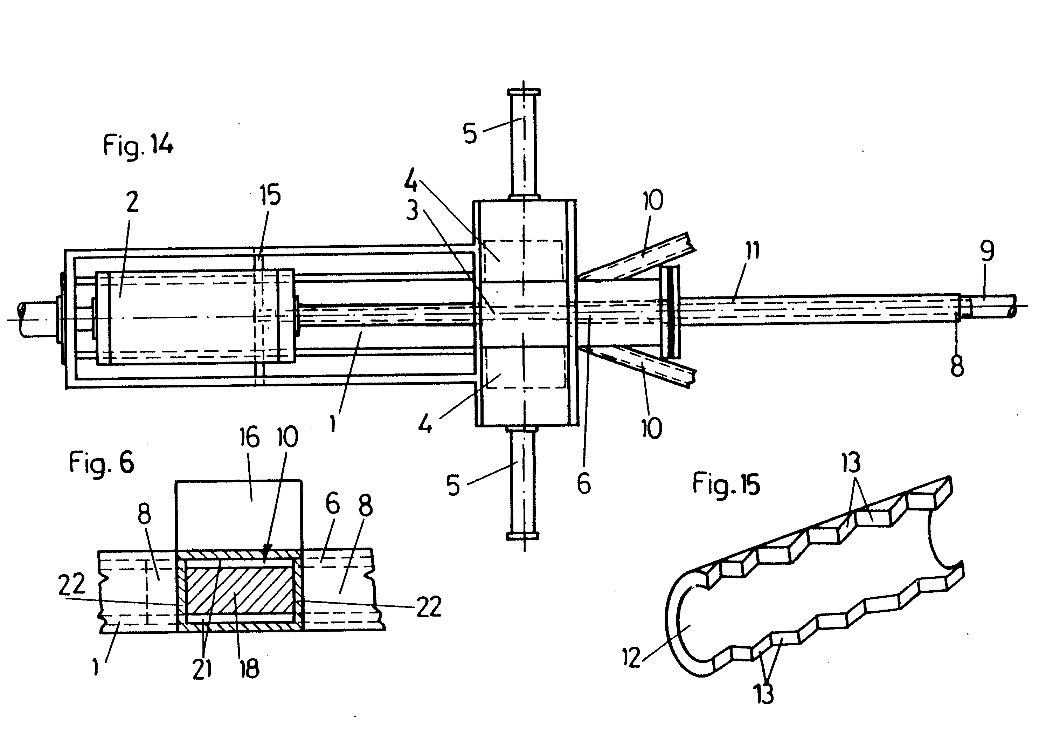

Eine andere Möglichkeit für die Zentrierung des Kernes 8 im Formwerkzeug 6 zeigen die Fig. 10 und 11, wobei das Formwerkzeug jeweils mit den vorstehend beschriebenen Querschnittsverjüngungen versehen ist. Zur Zentrierung und Fixierung des Kernes 8 sind in dieser Ausführung während des Einbringens der Teilmengen der Formmasse in den Füllraum 3 als Halteteile dienende Zentrierkolben 7' vorgesehen, die während des Preßvorganges zurückgezogen werden. Die Vorschublänge des Preßkolben 1 wird dabei so bemessen, daß er in der vorderen Endstellung zumindest geringfügig über die Zentrierkolben 7' ragt, sodaß nach dem Zurückziehen des Preßkolbens 1 der Kern 8 an dieser Stelle nicht von der Formmasse 20 umgeben ist und von den Zentrierkolben 7' fixiert werden kann. Die Zentrierkolben 7' sind bevorzugt parallel zu den Nebenkolben 4 ausgerichtet, um einer Verschiebung des Kernes 8 beim Einpressen der Formmasse 20 in den Füllraum 3 bestmöglichst Widerstand zu bieten.

In Fig. 13 ist das vordere Ende des Preßkolbens 1 dargestellt. Dessen Stirnfläche 14 ist mit Erhebungen versehen, die sich im entstehenden Strangabschnitt 9' abbilden. Beim Vorschub des nächstfolgenden Strangabschnittes 9' dringt dessen etwas weichere Formmasse in die Vertiefungen des vorhergehenden Strangabschnittes 9' ein und verbindet sich durch die entstehende Verzahnung innig mit diesem, die von außen unsichtbar durch die weitere Bewegung durch das Formwerkzeug 6 ein endloses Kunststoffrohr 9 ohne Schwächung der Stoßstellen entstehen läßt. Das entstehende Kunststoffrohr 9 (Fig. 12) kann beliebig abgelängt werden.

Die Strangpresse nach Fig. 14 dient zur Herstellung von endlosen Kunststofferzeugnissen, insbesondere ebenfalls von Rohren, Holstäben usw., in die die Formmasse nicht lose über Einfülltrichter eingebracht wird, sondern durch in schrägem Winkel zur Ausstoßrichtung angeordnete Zufuhrkanäle 10, durch die vorgeformte Teilstücke 12 in den Füllraum 2 zugeführt werden. Die Teilstücke 12 werden aus den einzelnen Teilmengen der für einen Strangabschnitt benötigten Formmasse in den Zufuhrkanälen 10 vorgeschalteten, nicht dargestellten Pressen erzeugt, in denen sie die nötige ungefähre Form erhalten. Ein derartiges Teilstück 12 in Art einer Rinne zeigt Fig. 15. Dabei ist bevorzugt vorgesehen, daß die Längsseiten des Teilstückes mit Unebenheiten 13, etwa in Art einer Zahnung, versehen werden. Die schräg zum Füllraum 3 zugeführten Teilstücke 12 werden durch die Nebenkolben 4 parallel zum Preßkolben ausgerichtet und in den Füllraum 3 eingedrückt. Beim Einpressen der Teilstücke 12 in den Füllraum 3 greifen die Unebenheiten 13 der Längsenden ineinander und verfließen durch die nachgeschaltene Querverdichtung in einen nachtlosen Strangabschnitt 9', die durch den ebenfalls eine Zahnung aufweisenden Preßkolben 1 in der bereits beschriebenen Weise zu einem Kunststoffrohr 9 od. dgl. verbunden und ausgestoßen werden.

Gegenüber der Ausführung nach Fig. 1 weist die Strangpresse nach Fig. 14 den Vorteil auf, daß eine exakte Dosierung jeder Teilmenge etwas erleichtert wird, der apparative Aufwand ist jedoch durch die benötigten Pressen für die Teilstücke 12 höher. Der übrige Aufbau der Strangpresse entspricht der in Fig. 1 beschriebenen Ausführung.

Die an das Formwerkzeug anschließende Heizeinrichtung 11 kann beispielsweise in Zonen verschiedener Temperatur unterteilt sein, wobei der vorderste Abschnitt der Heizeinrichtung 11 gegebenenfalls auch aus schlecht wärmeleitendem, beispielsweise keramischem Material, bestehen kann, dem eine Infrarotstrahlenquelle od. dgl. zugeordnet ist. Durchgeführte Versuche mit einem Phenol + Formaldehyd-Polykondensationsprodukt teigiger Konsistenz mit Holzmehl als Füllstoff und demzufolge geringer Fließfähigkeit, wobei eine Strangpresse nach Fig. 11 Verwendung fand, führten zu endlosen Hohlstäben, die nach entsprechender Ablängung beispielsweise als Werkzeugteile, Straßenmarkierungsstangen, Rohre, Pfähle usw. dienen können. Die verwendete Strangpresse mit einem Preßkolbenhub von 300 mm und einem Betriebsdruck von ca. 600 bar, produzierte pro Stunde etwa 150 lfm Hohlstäbe mit einem Außendurchmesser von 60 mm und einem Innendurchmesser von 40 mm.

**Ansprüche**

1. Verfahren zur Herstellung von endlosen Kunststofferzeugnissen aus duroplastischen Formmassen durch Strangpressen, indem die für jeden Strangabschnitt (9') benötigte Formmasse (20) in den Füllraum (3) der Strangpresse eingebracht, in das Formwerkzeug (6) vorgeschoben und mit dem im vorausgehenden Arbeitstakt gebildeten Strangabschnitt (9') vereinigt wird, worauf ein im wesentlichen formfester Strang aus dem Formwerkzeug (6) austritt, dadurch gekennzeichnet, daß die insbesondere wenig fließfähige Formmasse (20) für jeden Strangabschnitt (9') in mindestens zwei Teilmengen geteilt und mit wesentlichen gleichzeitig von mindestens zwei Seiten in den Füllraum (3) eingebracht wird, worauf der sich aus den Teilmengen formende Strangabschnitt (9') beim Vorschub durch das Formwerkzeug (6) senkrecht zur Vorschubrichtung verdichtet wird.

2. Verfahren nach Anspruch 1, zur Herstellung von endlosen Kunststofferzeugnissen mit mindestens einem Hohlraum, beispielsweise von Rohren od. dgl., dadurch gekennzeichnet, daß in den von einem Kern (8) durchsetzten Füllraum (3) annähernd gleiche Teilmengen der Formmasse (20) von mehreren Seiten gleichzeitig in den Füllraum (3) eingebracht werden.

3. Verfahren nach Anspruch 1 oder 2, dadurch gekennzeichnet, daß aus jeder Teilmenge der Formmasse (20) noch verformbare Teilstücke vorgeformt und in den Füllraum (3) eingebracht werden.

4. Verfahren nach Anspruch 3, dadurch gekennzeichnet, daß die Teilstücke (12) entlang ihren parallel zur Vorschubrichtung verlaufenden Berührungsflächen mit weiteren Teilstücken (12) mit Unebenheiten (13) versehen, beispielsweise gezahnt werden, wobei die Verzahnung beim Einbringen in den Füllraum (3) ineinandergreift.

5. Strangpresse zur Durchführung des Verfahrens nach einem der Ansprüche 1 bis 4, mit einem Preßkolben (1), mit einem Füllraum (3), mit einer Zufuhreinrichtung für die Formmasse (20), mit einem Formwerkzeug (6) und vorzugsweise mit einer Heiz- bzw. Kühleinrichtung (11), dadurch gekennzeichnet, daß die Zufuhreinrichtung mindestens zwei seitlich in den Füllraum (3) mündende Zufuhrkanäle (10) und pro Zufuhrkanal (10) einen Nebenkolben (4) aufweist und daß im Formwerkzeug (6) zumindest eine Querschnittsverjüngung vorgesehen ist.

6. Strangpresse nach Anspruch 5, dadurch gekennzeichnet, daß der Füllraum (3) von mindestens einem Kern (8) durchsetzt ist.

7. Strangpresse nach Anspruch 5 oder 6, dadurch gekennzeichnet, daß die Länge der Stirnfläche (17) des Nebenkolbens (4) der Länge des Füllraumes (3) entspricht.

8. Strangpresse nach Anspruch 7, dadurch gekennzeichnet, daß die Stirnfläche (17) des Nebenkolbens (4) der Oberfläche des entstehenden Strangabschnittes (9') angepaßt ist und in der vorderen Endstellung als seitliche Begrenzung des Füllraumes (3) dient.

9. Strangpresse nach Anspruch 6, dadurch gekennzeichnet, daß der Kern (8) sich in das Formwerkzeug (6) erstreckt und mittels Halteteilen am Formwerkzeug (6) abgestützt ist.

10. Strangpresse nach Anspruch 9, dadurch gekennzeichnet, daß die Halteteile durch Stege (7) gebildet sind, die am Kern (8) oder an der Innenwand des Formwerkzeuges (6) angeordnet sind, und gegebenenfalls Schraubenflächen aufweisen.

11. Strangpresse nach Anspruch 5, dadurch gekennzeichnet, daß die Querschnittsverjüngung durch zumindest eine nach innen gerichtete Abstufung (23) des Formwerkzeuges (6) gebildet ist, die in einem Winkel von ca. 60° zur Vorschubrichtung verläuft.

12. Strangpresse nach Anspruch 10 oder 11, dadurch gekennzeichnet, daß mindestens zwei Abstufungen (23) im Formwerkzeug (6) vorgesehen sind, von denen mindestens je eine unmittelbar vor und hinter dem Stützbereich (25) für den Kern (8) angeordnet ist.

13. Strangpresse nach Anspruch 11 oder 12, dadurch gekennzeichnet, daß die Oberflächen der Abstufungen (23) in Umfangsrichtung uneben ausgebildet, beispielsweise schrägverzahnt sind.

14. Strangpresse nach Anspruch 9, dadurch gekennzeichnet, daß die Halteteile durch mindestens zwei Zentrierkolben (7') gebildet sind, die zu den Nebenkolben (4) parallel ausgerichtet sind.

15. Strangpresse nach Anspruch 6, dadurch gekennzeichnet, daß der Kern (8) im Querschnitt etwa elliptisch ist und die größere Ellipsenachse des Kernquerschnittes in der Bewegungsrichtung von zwei einander diametral gegenüberliegenden Nebenkolben (4) liegt.

16. Strangpresse nach Anspruch 5 und 6, dadurch gekennzeichnet, daß am Ende jedes Zufuhrkanales (10) für die Formmasse (20) ein im wesentlichen keilförmiges Profilstück (18) parallel zum Kern (8) angeordnet ist, wobei dessen Dicke etwa dem Kerndurchmesser entspricht, und dessen Keilkante (19) zum Nebenkolben (4) weist.

**Claims**

1. Method for the producting of continuous plastics profiles from thermosetting moulding materials by extrusion, in which the moulding material (20) required for each profile section (9') is fed into the loading chamber (3) of the extruding press, advanced into the moulding tool (6) and united with the profile section (9') formed in the preceding operating phase, whereupon an endless profile which is substantially dimensionally stable exits from the moulding toll (6), characterized in that the moulding material (20) particularly of low flowability for each profiled section (9') is divided into at least two portions and substantially simultaneously fed into the loading chamber (3) from at least two sides, whereupon the profile section (9') being formed from said portions is compressed perpendicularly to the feed direction during feed through the moulding tool (6).

2. Method according to claim 1, for the production of continuous plastic profiles having at least one hollow space, e. g. of tubes or the like, characterized in that substantially equal portions of the moulding material (20) are simultaneously fed from various sides into the loading chamber (3) filled with a core (8).

3. Method according to claim 1 or 2, characterized in that from each portion of the moulding material (20) parts still being mouldable are preformed and fed into the loading chamber (3).

4. Method according to claim 3, characterized in that the part (12) provided with corrugations, e. g. with indentations, along their surfaces extending parallel to the feed direction and to be contacted with further parts (12), the indentations engaging when being fed into the loading chamber (3).

5. Extruding press for carrying out the method according to one auf claims 1 to 4, comprising a main ram (1), a loading chamber (3), a feed means for the moulding material (20), a moulding tool (6) and preferably a heating or cooling means (11), characterized in that the feed means have at least two feed channels (10) laterally running into the loading chamber (3) and one subsidiary ram (4) for each feed channel (10), and that at least one tapered portion is provided in the moulding tool (6).

6. Extruding press according to claim 5, characterized in that at least one core (8) traverses the loading chamber (3).

7. Extruding press according to claim 5 or 6, characterized in that the length of the front face (17) of the subsidiary ram (4) corresponds to the length of the loading chamber (3).

8. Extruding press according to claim 7, characterized in that the front face (17) of the subsidiary ram (4) is adapted to the surface of the resulting profile section (9') and serves in the extreme front position as a lateral limitation of the loading chamber (3).

9. Extruding press according to claim 6, characterized in that the core (8) extends into the moulding tool (6) and is supported on the moulding tool (6) by means of holding members.

10. Extruding press according to claim 9, characterized in that the holding members are formed by webs (7) arranged on the core (8) or at the internal wall of the moulding tool (6) and have screw surfaces, if required.

11. Extruding press according to claim 5, characterized in that the tapered portions are formed by an inwardly directed step (23) of the moulding tool (6) extending at an angle of about 60° to the feed direction.

12. Extruding press according to claim 10 or 11, characterized in that at least two steps (23) are provided in the moulding tool (6), at least one of them, each, being arranged immediately before and behind the supporting region (25) for the core (8).

13. Extruding press according to claim 11 or 12, characterized in that the surface of the steps (23) are uneven in circumferential direction, e. g. obliquely indented.

14. Extruding press according to claim 9, characterized in that the holding members are formed by at least two centering pistons (7') aligned parallel to the subsidiary rams (4).

15. Extruding press according to claim 6, characterized in that the core (8) has a substantially elliptic cross-section and that the greater elliptical axis of the cross-section of the core lies in the moving direction of two diametrically opposite subsidiary rams (4).

16. Extruding press according to claims 5 and 6, characterized in that at the end of each feed channel (10) for the moulding material (20) a substantially wedge-shaped profiled member (18) is arranged parallel to the core (8), the thickness thereof substantially corresponding to the diameter of the core and the wedge edge (19) thereof being directed towards the subsidiary ram (4).

**Revendications**

1. Procédé pour la production de produits sans fin en matière plastique à partir d'une matière moulable thermodurcissable par des presses-boudineuses, dans lesquelles on introduit la quantité de matière moulable (20) nécessaire pour chaque section de boudin (9') dans la chambre d'alimentation (3) de la presse, on l'avance dans l'outil de moulage (6) et on l'unit à la section de boudin (9') formée au cours de la phase opératoire précédente à la suite de quoi un boudin ayant une forme essentiellement stable sort de l'outil de moulage (6), caractérisé en ce qu'on divise la matière moulable (20), en particulier peu fluide (20) destinée à produire chaque section de boudin (9') en, au moins, deux parties que l'on introduit pratiquement en même temps, par deux côtés, au moins, dans la chambre (3), à la suite de quoi la section de boudin (9') résultante est comprimée, par l'avance de l'outil de moulage (6), perpendiculairement à la direction d'avance.

2. Procédé selon la revendication 1, pour la fabrication de produits en matière plastique sans fin comportant, au moins, une cavité, par exemple de tuyaux ou autres, caractérisé en ce qu'on introduit dans la chambre de remplissage (3), traversée par un noyau (8), des fractions approximativement égales de matière moulable (20) simultanément de plusieurs côtés.

3. Procédé selon l'une quelconque des revendications 1 et 2, caractérisé en ce qu'on soumet les parties de la matière moulable (20) qui sont encore déformables à un préformage avant de les introduire dans la chambre de remplissage ou d'alimentation (3).

4. Procédé selon la revendication 3, caractérisé en ce qu'on pourvoit les sections partielles (12), le long de leurs surfaces de contact s'étendant parallèlement à la direction d'avance, avec d'autres sections partielles munies d'inégalités (13), par exemple, de dentures, ces dentures engrénant au moment de l'introduction dans la chambre (3).

5. Presse-boudineuse pour la mise en œuvre du procédé spécifié dans l'une quelconque des revendications 1 à 4 qui comprend un piston de pressage (1), une chambre de remplissage ou d'alimentation (3), un dispositif d'alimentation pour amener la matière moulable (20), un outil de formage ou de moulage (6) et, de préférence, un dispositif de chauffage ou de refroidissement (11), caractérisée en ce que le dispositif d'alimentation comprend au moins, deux canaux d'alimentation (10) débouchant latéralement dans la chambre (3) et pour chaque canal (10), un piston auxiliaire (4) et en ce que l'outil de formage (6) présente, au moins, un rétrécissement de sa section.

6. Presse-boudineuse selon la revendication 5, caractérisée en ce que la chambre d'alimentation (3) est traversée par, au moins, un noyau (8).

7. Presse-boudineuse selon l'une quelconque des revendications 5 et 6, caractérisée en ce que la longueur de la surface frontale (17) du piston auxiliaire (4) correspond à la longueur de la chambre (3).

8. Presse-boudineuse selon la revendication 7, caractérisée en ce que la surface frontale (17) du piston auxiliaire (8) est adaptée à la surface de la section de boudin résultante (9′) et sert, dans sa position extrême antérieure, à limiter latéralement la chambre (3).

9. Presse-boudineuse selon la revendication 6, caractérisée en ce que le noyau (8) s'étend dans l'outil de formage (6) et est soutenu au moyen d'éléments de support sur ledit outil (6).

10. Presse-boudineuse selon la revendication 9, caractérisée en ce que les supports sont constitués par des barrettes (7) qui sont montées sur le noyau (8) ou sur la paroi intérieure de l'outil de formage (6) et le cas échéant, présentent des surfaces de vissage.

11. Presse-boudineuse selon la revendication 5, caractérisée en ce que le rétrécissement de la section est formé par, au moins, un gradin (23) orienté vers l'intérieur de l'outil de formage (6), qui s'étend suivant un angle d'environ 60° par rapport à la direction d'avance.

12. Presse-boudineuse selon l'une quelconque des revendications 10 et 11, caractérisée en ce que, au moins, deux gradins (23) sont prévus dans l'outil de formage (6) dont, au moins, un est disposé immédiatement devant et un autre immédiatement derrière la région de soutien (25) du noyau (8).

13. Presse-boudineuse selon l'une quelconque des revendications 11 et 12, caractérisée en ce que, dans le sens circonférentiel, les surfaces des gradins (23) sont inégales, par exemple, dentées obliquement.

14. Presse-boudineuse selon la revendication 9, caractérisée en ce que les éléments de support sont formés, par au moins, deux pistons de centrage (7′) qui sont disposés parallèlement au piston auxiliaire (4).

15. Presse-boudineuse selon la revendication 6, caractérisée en ce que le noyau (8) présente une section approximativement elliptique et en ce que le grand axe de l'ellipse de la section du noyau est disposé dans la direction du mouvement de deux pistons auxiliaires (4) diamétralement opposés.

16. Presse-boudineuse selon l'une quelconque des revendications 5 et 6, caractérisée en ce qu'à l'extrémité de chaque canal d'alimentation (10) de la matière moulable (20) est disposé, parallèlement au noyau (8), une pièce profilée essentiellement cunéiforme (18), dont l'épaisseur correspond approximativement au diamètre du noyau et dont l'arête (19) est orientée vers le piston auxiliaire (4).

Fig. 1

Fig. 2

Fig. 4

Fig. 12

Fig. 13

2

Fig. 7

Fig. 5

3

Fig. 8

Fig. 9

Fig. 3

Fig. 10

Fig. 11

Fig. 14

Fig. 6

Fig. 15

0 020 699